# EUROPÄISCHE PATENTSCHRIFT

(11) **EP 3 688 417 B1**
(45) Veröffentlichungstag und Bekanntmachung des Hinweises auf die Patenterteilung: **20.03.2024**
(21) Anmeldenummer: 18792374.3
(22) Anmeldetag: 26.09.2018
(51) Int. Cl.: G01D 11/24, G01D 5/24

(54) **KONTAKTLOS ARBEITENDER WEGSENSOR**
CONTACTLESS DISPLACEMENT SENSOR
CAPTEUR DE DÉPLACEMENT FONCTIONNANT SANS CONTACT

(30) Priorität: 29.09.2017 DE 102017217494
(43) Veröffentlichungstag der Anmeldung: 05.08.2020
(73) Patentinhaber: Micro-Epsilon Messtechnik GmbH & Co. KG, 94496 Ortenburg (DE)
(72) Erfinder: WISSPEINTNER, Thomas, 94496 Ortenburg (DE); HAAS, Harald, 94099 Ruhstorf a.d. Rott (DE); SCHOPF, Tobias, 84371 Triftern (DE); HOENICKA, Reinhold, 94496 Ortenburg (DE)
(74) Vertreter: Ullrich & Naumann PartG mbB
(86) Internationale Anmeldenummer: PCT/DE2018/200088
(87) Internationale Veröffentlichungsnummer: WO 2019/063048

(56) Entgegenhaltungen:
- WO-A2-2011/076181
- US-A1- 2001 040 241
- US-A1- 2016 187 366
- DATABASE INSPEC [Online] THE INSTITUTION OF ELECTRICAL ENGINEERS, STEVENAGE, GB; 1985, PETTENPAUL E ET AL: "A high-temperature sensor on monolithic GaAs Hall IC", XP002787550, Database accession no. 2678614
- STOICA LUCIAN ET AL: "A High Temperature Frequency Signal Conditioning Unit for Aeronautical Rotating Systems", IEEE TRANSACTIONS ON CIRCUITS AND SYSTEMS I: REGULAR PAPERS, IEEE, US, Bd. 63, Nr. 5, Mai 2016 (2016-05), Seiten 587-598, XP011615505, ISSN: 1549-8328, DOI: 10.1109/TCSI.2016.2529258 [gefunden am 2016-06-28]
- PORTMANN L ET AL: "SOI CMOS hall effect sensor architecture for high temperature applications (up to 300/spl deg/ C)", 12. Juni 2002 (2002-06-12), PROCEEDINGS OF IEEE SENSORS 2002. ORLANDO, FL, JUNE 12 - 14, 2002; [IEEE INTERNATIONAL CONFERENCE ON SENSORS], NEW YORK, NY : IEEE, US, PAGE(S) 1401 - 1406, XP010605325, ISBN: 978-0-7803-7454-6 Zusammenfassung Seite 1401, linke Spalte, Absatz 3; Abbildung 1 Seite 1403, rechte Spalte, Absatz 3 - letzter Absatz; Abbildung 7 Seite 1404, linke Spalte, letzter Absatz - rechte Spalte, Absatz 1 Seite 1405, linke Spalte, Absatz 1; Abbildung 11

## Beschreibung

Die Erfindung betrifft einen kontaktlos arbeitenden Wegsensor mit einem für hohe Temperaturen geeigneten Sensorelement und einer mit dem Sensorelement elektrisch gekoppelten und eine Ansteuerungs- und/oder eine Auswerteelektronik aufweisenden Elektronik.

Kontaktlos arbeitende Wegsensoren sind in weitem Umfang aus der Praxis bekannt, wobei es sich bspw. um Wegsensoren mit integrierter Elektronik für Temperaturen im Bereich von -40°C bis maximal 125°C handelt. Bei höheren Temperaturen wird die Elektronik üblicherweise vom Sensorelement abgesetzt oder getrennt angeordnet, so dass sie aus dem Hochtemperaturbereich ausgelagert ist. In dem Bereich bis 125°C kann herkömmliche CMOS-Elektronik in Standard-Ausführungen verwendet werden.

An dieser Stelle sei betont, dass es sich bei der vorliegenden Erfindung um einen Wegsensor handelt, der im sogenannten Hochtemperaturbereich oberhalb von 125°C arbeiten kann. Dabei umfasst die Bezeichnung Wegsensor Sensoren, die für eine Wegmessung, Positionsmessung, Abstandsmessung, Dickenmessung usw. geeignet sind.

Ein für den Hochtemperaturbereich geeigneter kontaktlos arbeitender Wegsensor der eingangs genannten Art ist aus der WO 2014/114279 A1 bekannt. Bei dem dort beschriebenen Sensor ist ein hochtemperaturtaugliches Sensorelement von einem speziellen Ausgleichselement und einem Gehäuse umgeben. Die Elektronik ist dabei von dem Sensorelement abgesetzt und mit dem Sensorelement über ein hochtemperaturbeständiges Stahlmantelkabel mit mineralischer Isolierung elektrisch gekoppelt.

Die Dokumente US 2016/187366 A1 und WO 2011/076181 A2 beschreiben weitere für den Hochtemperaturbereich geeignete, kontaktlos arbeitende Wegsensoren.

Bei dem bekannten, durch einen Wirbelstromsensor gebildeten kontaktlos arbeitenden Wegsensor ist problematisch, dass die beiden Kontaktstellen der Kabelverbindung - eine am Sensorelement und eine an der Elektronik - mehrere Nachteile mit sich bringen. Diese Nachteile werden im Folgenden erläutert:
Da das Kabel bei dem bekannten Wegsensor Teil der Messkette ist, da das Sensorelement und die Elektronik über das Kabel verbunden sind, müssen während eines Betriebs des Wegsensors die auftretenden sehr kleinen und hochfrequenten Signale über das Kabel und die Kontaktstellen übertragen werden. Da auch das Kabel auf der Seite des Sensorelements zwangsweise im Hochtemperaturbereich liegt, sind besondere Spezialkabel notwendig, bspw. Teflonkabel mit Kupfer- oder Stahllitzen, Kabel mit Mantel aus Glasgewebe oder mineralisolierte Stahlmantelkabel. Diese Kabeltypen sind sehr schwierig zu verarbeiten, da die Litzen oder der Mantel aus Edelstahl nur durch ein aufwendiges Schweißen sicher mit dem Sensorgehäuse oder Sensorelement verbindbar sind. Teflonkabel sind weiterhin schwer abdichtbar, da auf Teflon Vergussmassen oder Klebstoffe nicht oder nur schwer haften.

Des Weiteren ergeben sich messtechnische Nachteile, da das Kabel - als Teil der Messkette - parasitäre Impedanzen (Kapazitäten, Widerstände, Induktivitäten) verursacht, die bei einer Veränderung des Kabels durch bspw. Temperatur, Bewegung oder EMV-Einstrahlung das Messergebnis beeinflussen können. Hochtemperaturtaugliche Kabel haben oft einen geringen Isolationswiderstand oder schränken den Frequenzbereich ein, da keine hohen Trägerfrequenzen möglich sind. Da das Sensorelement im Hochtemperaturbereich liegt, die Elektronik aber im Normaltemperaturbereich, herrscht entlang des Kabels ein Temperaturgradient, der nur schwer kompensierbar ist.

Weiterhin müssen für messtechnische Anwendungen häufig Koaxial- oder sogar Triaxialkabel mit den oben genannten Eigenschaften verwendet werden, was hohe Anforderungen an die Aufbau- und Verbindungstechnik stellt. Darüber hinaus wird der Bauraum durch die erforderliche aufwendige Kabelkontaktierung zwangsweise sehr groß. Schließlich steigt die Fehleranfälligkeit aufgrund der schwierigen Abdichtung der Kontaktstelle an dem Kabel oder an einem Stecker oder durch Störungen auf der Signalleitung.

Hochtemperaturtaugliche Wegsensoren finden ihre Anwendung in unterschiedlichen Bereichen. Dabei handelt es sich bspw. um den Bereich der Förderung von Öl und Gas, bei dem Vibrationen, hohe Drücke und hohe Temperaturen auftreten können, den Bereich der Überwachung von Turbinen, bspw. Triebwerke, Lader, Dampfturbinen oder Gasturbinen, den Bereich von Wärmekraftmaschinen oder Prozessanlagen wie bspw. CVD-Anlagen, den Bereich von Anwendungen im Umfeld radioaktiver Strahlung und den Bereich der Raumfahrt.

Der vorliegenden Erfindung liegt daher die Aufgabe zugrunde, einen kontaktlos arbeitenden Wegsensor der eingangs genannten Art derart auszugestalten und weiterzubilden, dass sichere Messungen im Hochtemperaturbereich mit konstruktiv einfachen Mitteln ermöglicht sind.

Erfindungsgemäß wird die voranstehende Aufgabe durch einen Sensor mit den Merkmalen des Anspruchs 1 gelöst. Danach ist der Sensor derart ausgestaltet und weitergebildet, dass die Elektronik für einen Temperaturbereich oberhalb 125°C ausgelegt und mit dem Sensorelement direkt verbunden oder in das Sensorelement integriert ist.

In erfindungsgemäßer Weise ist erkannt worden, dass es auch im Hochtemperaturbereich oberhalb von 125°C möglich ist, eine elektrische Kopplung zwischen Sensorelement und Elektronik ohne bekannte Kabel vorzunehmen, über die die Elektronik in herkömmlicher Weise von dem hohen Temperaturen ausgesetzten Sensorelement abgesetzt werden kann. Im Konkreten wird eine für diesen Hochtemperaturbereich ausgelegt Elektronik mit dem Sensorelement direkt verbunden oder in das Sensorelement integriert. Die hochtemperaturtaugliche Elektronik ist dabei quasi direkt an dem Sensorelement angebracht, ohne dass irgendwelche Kabelverbindungen zur elektrischen Kopplung zwischen Sensorelement und Elektronik verwendet werden müssen. Dies gewährleistet eine hohe Messsicherheit, da Störeinflüsse durch das Kabel bei der Übertragung der ermittelten sehr kleinen und/oder hochfrequenten Signale vermieden werden können. Des Weiteren ist auch die Herstellung erheblich vereinfacht, da keine schwer verarbeitbaren Spezialkabel verwendet werden müssen und auch kein großer Bauraum für eine aufwendige Kabelkontaktierung bereitgestellt werden muss.

Folglich ist mit dem erfindungsgemäßen Wegsensor ein Wegsensor bereitgestellt, mit dem sichere Messungen im Hochtemperaturbereich mit konstruktiv einfachen Mitteln ermöglicht sind.

Im Hinblick auf eine besonders hohe Eignung für den Hochtemperaturbereich kann die Elektronik oder mindestens eine Komponente der Elektronik auf Basis der Sol-, Silicon on Insulator, Technologie oder auf Basis von GaAs, SiC oder Diamant als Halbleitermaterial hergestellt sein. Dabei ist die Sol-Technologie bis zu Arbeitstemperaturen von etwa 300°C geeignet. GaAs, SiC oder Diamant als Halbleitermaterialien sind auch für Arbeitstemperaturen von über 300°C geeignet.

Die im Rahmen der Erfindung eingesetzten Hochtemperatur-Sensorelemente, die zur Messung von geometrischen Größen wie bspw. Abstand, Position, Weg, Dicke oder Schwingung eingesetzt werden und aufgrund dieser Anwendungsbereiche als Wegsensorelemente bezeichnet werden können, basieren auf elektromagnetischen Messprinzipien, d.h. eine induktive oder auf Wirbelströmen basierende Arbeitsweise. Aufgrund dieser Messprinzipien sind diese Sensorelemente besonders für Hochtemperaturanwendungen geeignet.

In konstruktiv besonders einfacher Weise kann das Sensorelement ein Substrat mit mindestens einer darin eingebetteten Sensorkomponente in Form von Windungen einer Spule aufweisen. In vorteilhafter Weise ist auf dem Substrat mindestens eine Leiterbahn angeordnet, die zum Kontaktieren der Elektronik dienen kann.

Das Substrat sollte selbst für den Hochtemperaturbereich geeignet sein, wobei das Substrat in vorteilhafter Weise eine Leiterplatte, vorzugsweise aus Polyimid, PTFE (Polytetrafluorethylen) oder LCP (Liquid Crystal Polymer), oder eine Keramik, vorzugsweise aus AL₂O₃, LTCC (Low Temperature Cofired Ceramics) oder HTCC (High Temperature Cofired Ceramics), aufweisen kann. Derartige Hochtemperatur-Leiterplatten sind bis zu einer Temperatur von etwa 300°C geeignet. Für Temperaturen darüber sind in besonders vorteilhafter Weise Substrate aus Keramik geeignet. Grundsätzlich kann ein keramisches Sensorelement für den Hochfrequenzbereich realisiert werden.

Die Elektronik des Wegsensors kann direkt auf dem Sensorelement angebracht werden. Dabei können für erforderliche Aufbau- und Verbindungstechniken hochtemperaturtaugliche Methoden eingesetzt werden. Bspw. kann in vorteilhafter Weise die Elektronik in einem Keramikgehäuse angeordnet sein oder mindestens eine in einem Keramikgehäuse angeordnete Komponente aufweisen. Dabei können Komponenten der Elektronik oder Elektronikbausteine in einem Keramikgehäuse angeordnet sein. Alternativ hierzu kann die Elektronik als Chip-on-Board oder Chip-on-Ceramic oder als Flip-Chip auf einem Siliziumträger mit dem Sensorelement verbunden werden. Dabei können Halbleiterbausteine - Dies - direkt mittels Aluminium- oder Golddraht-Bonden mit Bondpads auf einem Substrat mit dem Sensorelement verbunden werden. Hierzu können die oben bereits erwähnten Leiterbahnen verwendet werden, die direkt auf dem Substrat angeordnet sein können. Im Fall einer Leiterplatte als Substrat können im Konkreten Kupfer-Leiterbahnen eingesetzt werden. Bei der LTCC- oder HTCC-Technologie können gedruckte Schaltungen oder Leiterbahnen verwendet werden.

Erfindungsgemäß weist die Ansteuerungselektronik einen Oszillator auf. Mit einem derartigen Oszillator kann die für den Betrieb des Wegsensors erforderliche Frequenz vor Ort am Sensorelement erzeugt werden. Es muss daher kein hochfrequentes Ansteuersignal über eine Leitung von einer entfernten Position aus zu der Elektronik übertragen werden. Der Oszillator kann bspw. ein Sinus-Oszillator oder ein Rechteck-Oszillator sein, wobei ein derartiger Rechteck-Oszillator besonders einfach zu realisieren ist.

Die Auswerteelektronik kann grundsätzlich aus mehreren funktionalen Baugruppen bestehen. Erfindungsgemäß weist die Auswerteelektronik zusätzlich zum Oszillator einen Demodulator beispielsweise zur Erzeugung eines gleichgerichteten Spannungs- oder Stromsignals auf. Dies stellt eine sehr einfache Ausführung der Auswerteelektronik dar. Mit einer derartigen Ausgestaltung muss über eine Anschlussleitung kein hochfrequentes Signal übertragen werden, das anfällig für diverse Störeinflüsse ist. In vorteilhafter Weise kann die Auswerteelektronik zusätzlich einen Vorverstärker aufweisen, da in diesem Fall vorverstärkte Signale mit einem höheren Pegel übertragen werden können, die für externe Störungen weniger anfällig sind. Alternativ oder zusätzlich zu einem derartigen Vorverstärker kann die Auswerteelektronik einen Analog-Digital-Wandler aufweisen, mit dem ermittelte Signale bereits digitalisiert werden können, was eine Signalübertragung besonders störsicher macht. Weiterhin kann die Auswerteelektronik alternativ oder zusätzlich zu einem Vorverstärker und/oder einem Analog-Digital-Wandler einen Microcontroller aufweisen, der bereits eine Signalverarbeitung durchführt, bspw. eine Linearisierung, Filterung usw. Bei der Konfiguration der Auswerteelektronik ist besonders vorteilhaft, dass heutzutage auch Microcontroller für Temperaturbereiche bis 200° C verfügbar sind.

Komponenten der Elektronik können bspw. in Sol- oder GaAs-Prozessen hergestellt werden.

Erfindungsgemäß besteht die Elektronik aus Logik-Bausteinen oder weist auf, bspw. XOR-Gatter, da Logik-Bausteine besonders günstig auch in einer Hochtemperatur-Ausführung verfügbar sind. Mit den Logik-Bausteinen sind die Oszillator- und Demodulatorschaltungen realisiert.

Aufgrund der mit dem Sensorelement direkt verbundenen oder in das Sensorelement integrierten Elektronik können einfache und günstige Kabel für die Versorgung und Datenübertragung von dem Wegsensor zu Peripheriegeräten und in umgekehrter Richtung verwendet werden, da keine hochfrequenten Signale oder Signale mit niedrigem Pegel übertragen werden müssen. Zur Ansteuerung genügt eine Versorgungsspannung. Die Elektronik am oder im Sensorelement kann ein bereits demoduliertes Signal liefern, für das keine besonderen Anforderungen an die Leitung gestellt werden. Es können daher Standard-Hochtemperaturleitungen oder Stahlmantelkabel für Ausgang und/oder Versorgung verwendet werden, bspw. mit verdrillten Leitungen. Im einfachsten Fall genügt ein Adernpaar (z.B. twisted pair), wenn das Signal auf die Versorgungsleitung in digitaler Form aufmoduliert wird oder analog über eine Stromschnittstelle zur Verfügung gestellt wird. Werden Versorgungs- und Signalleitung getrennt ausgeführt, genügen zwei Adernpaare, bspw. 2 x 2 twisted pair. Diese sind günstiger und einfacher zu verarbeiten als Koaxial- oder Triaxialleitungen. Die Anschlussleitung kann in bekannter Weise durch ein Gehäuse geführt und mit der Elektronik verbunden werden. Hierzu kann die Elektronik einen geeigneten Kabelanschluss aufweisen.

Da bei hohen Temperaturen chemische Prozesse beschleunigt ablaufen, ist eine Hermetisierung des Wegsensors oder von Komponenten des Wegsensors besonders vorteilhaft. Im Konkreten können der Wegsensor oder das Sensorelement und/oder die Elektronik hermetisiert sein. Die Hermetisierung hat zwei Aspekte: Zum einen wird verhindert, dass schädliche Stoffe in den Wegsensor oder das Sensorelement und/oder die Elektronik eindringen und dort die Elektronikkomponenten oder die Zuleitungen oder Kontakte angreifen. Zum anderen verhindert die Hermetisierung das Ausgasen bzw. Austreten von Stoffen, die am Einbauort des Wegsensors Verunreinigungen oder Beschädigungen hervorrufen könnten. Eine solche Hermetisierung ist bei bestimmten Anwendungen wie bspw. bei Prozessanlagen oder in der Raumfahrt notwendig.

Besonders vorteilhaft ist es, wenn ein Hohlraum des Wegsensors, des Sensorelements oder der Elektronik beim Hermetisieren mit einem vorzugsweise trockenen Schutzgas befüllt wird oder evakuiert wird.

Die Hermetisierung kann auf unterschiedliche Art und Weise erfolgen. In besonders einfacher Weise kann die Hermetisierung durch ein Gehäuse realisiert sein, vorzugsweise durch ein mit dem Substrat - insbesondere umlaufend - verlötetes Gehäuse, welches mit dem Substrat hierdurch hermetisch dicht verbunden ist. Beispielsweise kann ein Metallgehäuse mit einem Keramiksubstrat hermetisch dicht verlötet werden, bspw. durch Aktivlöten oder durch ein Laserschweißen mit vorher per Vakuumlöten aufgelötetem Metallring. Ein derartiges Metallgehäuse bietet in vorteilhafter Weise eine Abschirmung gegenüber Abstrahlung oder Einstrahlung störender Signale.

Alternativ hierzu kann die Hermetisierung durch eine Kapselung im Substrat realisiert sein. Dabei kann eine Anordnung der Elektronik oder einer Komponente der Elektronik in oder auf einer Lage oder Schicht des Substrats realisiert werden. In weiter vorteilhafter Weise kann mindestens eine weitere darüber angeordnete Lage oder Schicht des Substrats zur weiteren Kapselung der Elektronik oder einer Komponente der Elektronik realisiert sein. Mit anderen Worten kann die Elektronik in einer Lage mittels weiterer darüber angeordneter Lagen "vergraben" sein. Hierdurch ist eine besonders sichere Hermetisierung des Sensors und im Konkreten der Elektronik oder einer Komponente der Elektronik realisiert.

Weiterhin kann durch das Metallgehäuse oder die Kapselung eine hohe Druckdichtigkeit erreicht werden, was bei manchen Anwendungen notwendig ist, wo neben hohen Temperaturen auch hohe Drücke vorherrschen (z. B. bei Tiefbohrungen).

Der erfindungsgemäße Wegsensor kann beispielsweise induktiv, über Wirbelstrom oder kapazitiv arbeiten.

Mit dem erfindungsgemäßen Wegsensor ist ein kompakter, hochtemperaturtauglicher Wegsensor mit direkt verbundener oder integrierter Elektronik bereitgestellt, wobei eine einfache Leitung zum Anschluss an Versorgungs- und/oder Peripheriegeräte verwendet werden kann. Dabei kann eine hohe Signalqualität durch ein mittels der Elektronik des Wegsensors bereits aufbereitetes und verstärktes Signal bereitgestellt werden. Als Anwendung für den erfindungsgemäßen Wegsensor kommt insbesondere die Messung von Abstand, Position, Weg und Schwingung mittels induktivem, kapazitivem oder Wirbelstrom-Messprinzip in Frage.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung bevorzugte Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer geschnittenen Darstellung einen Wegsensor gemäß einem ersten erfindungsgemäßen Ausführungsbeispiel,
- Fig. 2: in einer geschnittenen Darstellung ein zweites erfindungsgemäßes Ausführungsbeispiel,
- Fig. 3: in einer geschnittenen Darstellung ein drittes erfindungsgemäßes Ausführungsbeispiel,
- Fig. 4: in einer geschnittenen Darstellung ein viertes erfindungsgemäßes Ausführungsbeispiel und
- Fig. 5: ein Blockschaltbild eines fünften erfindungsgemäßen Ausführungsbeispiels.

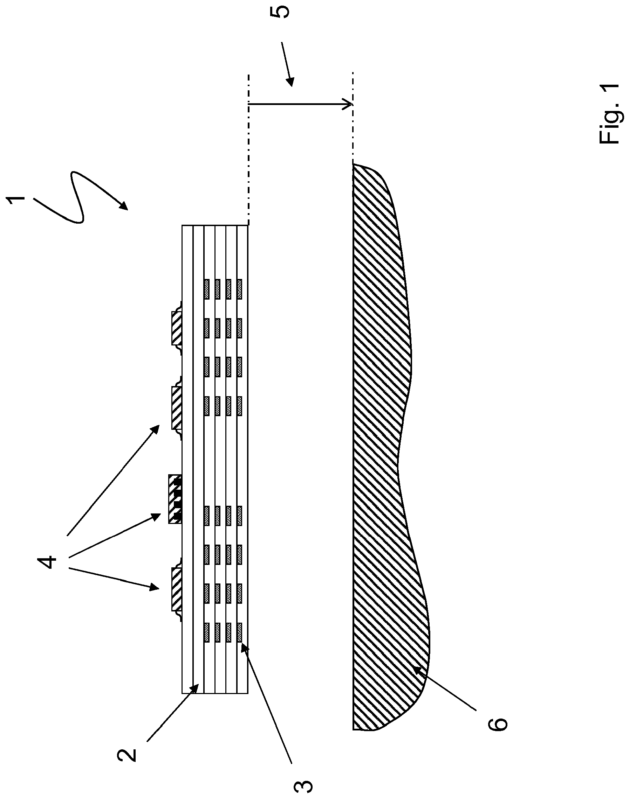

Fig. 1 zeigt in einer geschnittenen Darstellung ein erstes Ausführungsbeispiel eines erfindungsgemäßen kontaktlos arbeitenden Wegsensors mit einem für hohe Temperaturen ausgelegten Sensorelement 1 mit einem mehrlagigen Substrat 2 aus LTCC-Keramik, wobei es sich hier um einen induktiven oder Wirbelstrom-Wegsensor handelt. Im Substrat 2 eingebettet sind mehrlagige Windungen 3 einer Spule des Sensorelements 1. Auf der Rückseite des Substrats 2 ist eine Elektronik mit Elektronikkomponenten 4 angeordnet, wobei jede Elektronikkomponente 4 ein mit dem Substrat 2 verlötetes Keramikgehäuse aufweist. Der Wegsensor misst den Abstand 5 zu einem Messobjekt 6.

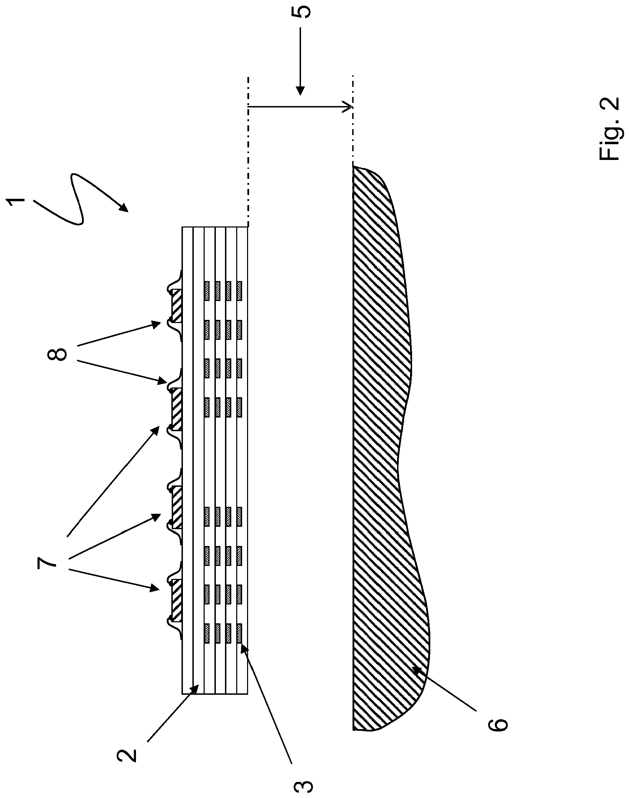

Fig. 2 zeigt in einer geschnittenen Darstellung ein zweites Ausführungsbeispiel eines erfindungsgemäßen kontaktlos arbeitenden Wegsensors, wobei dieses Ausführungsbeispiel im Wesentlichen die gleiche Anordnung wie das erste Ausführungsbeispiel gemäß Fig. 1 aufweist. Allerdings weisen die Elektronikkomponenten kein Keramikgehäuse auf, sondern sind durch Halbleiter-Bausteine, so genannte Elektronik-Chips, Dies, 7 gebildet, die mittels Golddraht-Bonds 8 auf Bondpads des Substrats 2 gebondet sind.

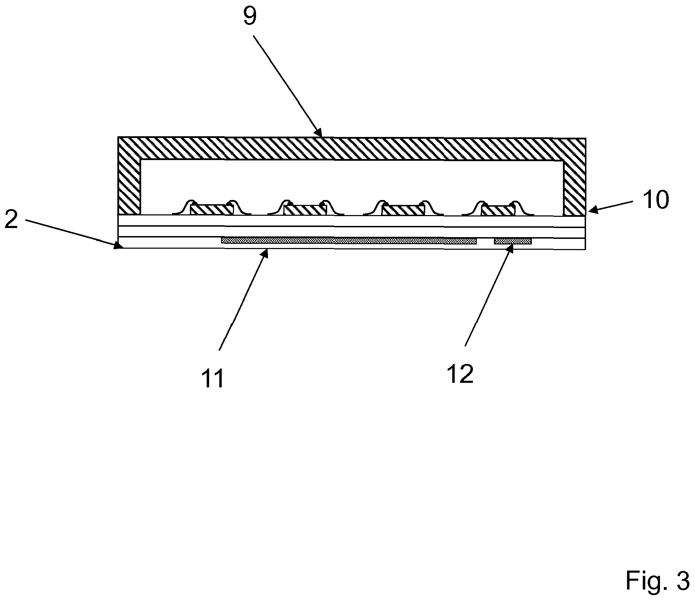

Fig. 3 zeigt in einer geschnittenen Darstellung ein drittes Ausführungsbeispiel eines erfindungsgemäßen kontaktlos arbeitenden Wegsensors, wobei es sich hierbei um einen kapazitiven Wegsensor zur Abstandsmessung mit einem Metallgehäuse 9 handelt, das durch Aktivlöten mit dem Substrat 2 aus Keramik verbunden ist. Durch das Aktivlöten ist eine hermetisch dichte Lötverbindung 10 hergestellt. Der kapazitive Wegsensor enthält eine Messelektrode 11 und eine konzentrische Schirmelektrode 12, die in das Substrat 2 und damit in das Sensorelement integriert sind.

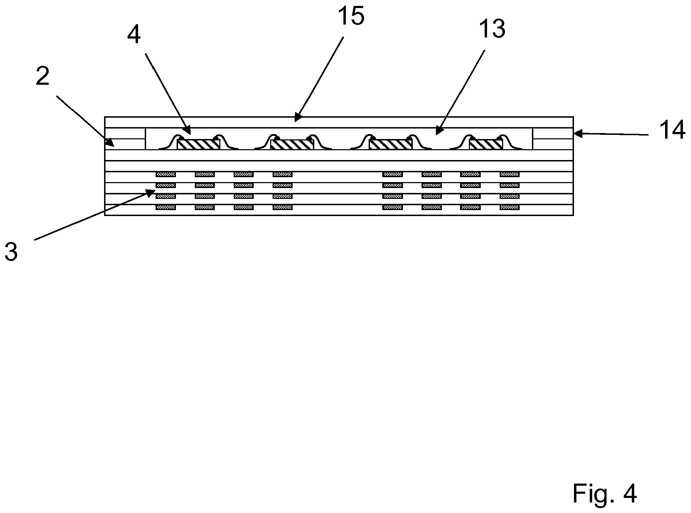

Fig. 4 zeigt ein viertes Ausführungsbeispiel eines kontaktlos arbeitenden erfindungsgemäßen Wegsensors, wobei an diesem Beispiel eines Wirbelstrom-Wegsensors eine andere Art der Hermetisierung gezeigt ist. Die Elektronikkomponenten 4 sind innerhalb der Lagen des mehrlagigen Substrats 2 "vergraben". Dabei sind die Elektronikkomponenten 4 auf einer Lage angeordnet. Dies geschieht durch die Schaffung eines oder mehrerer Hohlräume 13 im Substrat 2. Dabei wird zunächst eine Lage mit Elektronikkomponenten 4 bestückt. Darauf folgen dann weitere Lagen 14 mit ausgestanzten Freiräumen, die am Schluss mit einer oder mehreren Lagen 15 vollflächig abgeschlossen werden. Nach dem Sintern entsteht eine hermetisch dichte Packung sämtlicher Lagen mit dem eingesinterten Messelement in Form der Spule 3 und der Elektronik aus den Elektronikkomponenten 4.

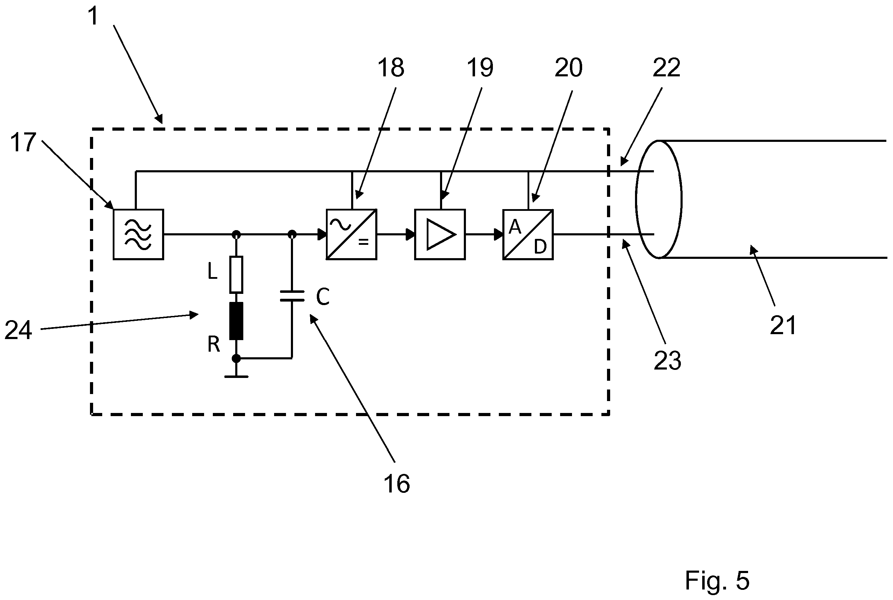

Fig. 5 zeigt anhand eines Blockschaltbilds ein fünftes Ausführungsbeispiel eines kontaktlos arbeitenden erfindungsgemäßen Wegsensors, wobei es sich hier um einen Wirbelstrom-Wegsensor handelt. Das Sensorelement 1 enthält als Messelement eine Spule 24 mit einer Induktivität L und einem Widerstand R, wobei die Spule 24 mit einem Kondensator C 16 zu einem Schwingkreis ergänzt ist. Die Spule 24 ist in dem Substrat versintert. Auf der Rückseite des Substrats befindet sich die Ansteuerungselektronik mit dem Oszillator 17 und die Auswerteelektronik, die aus einem Demodulator 18, einem Vorverstärker 19 und einem Analog-Digital-Wandler 20 als funktionale Baugruppen besteht. Ein mit der Elektronik verbundenes Kabel 21 besteht aus 2 x 2 Adern in twisted-pair-Anordnung, wobei ein Adernpaar 22 als Zuleitung die Versorgungsspannung liefert und ein anderes Adernpaar 23 digitalisierte Signale überträgt.

Hinsichtlich weiterer vorteilhafter Ausgestaltungen des erfindungsgemäßen Wegsensors wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Wegsensors lediglich zur Erörterung der beanspruchten Lehre dienen, diese jedoch nicht auf die Ausführungsbeispiele einschränken.

### Bezugszeichenliste

- 1: Sensorelement
- 2: mehrlagiges Substrat
- 3: Windungen einer Spule, Spule
- 4: Elektronikkomponente
- 5: Abstand Sensorelement-Messobjekt
- 6: Messobjekt
- 7: Elektronik-Chips (Dies)
- 8: Golddraht-Bond
- 9: Metallgehäuse
- 10: Lötverbindung, Schweißnaht Aktivlot
- 11: Messelektrode
- 12: Schirmelektrode
- 13: Hohlraum
- 14: Lagen mit ausgestanzten Freiräumen
- 15: Abschlusslage
- 16: Kondensator
- 17: Oszillator
- 18: Demodulator
- 19: Vorverstärker
- 20: AD-Wandler
- 21: Kabel
- 22: Adernpaar
- 23: Adernpaar
- 24: Spule

## Patentansprüche

1. Kontaktlos über Wirbelstrom oder induktiv arbeitender Wegsensor mit einem für hohe Temperaturen oberhalb von 125°C geeigneten Sensorelement (1) und einer mit dem Sensorelement (1) elektrisch gekoppelten und eine Ansteuerungs- und/oder eine Auswerteelektronik aufweisenden Elektronik, wobei das Sensorelement (1) ein Substrat (2) mit mindestens einer darin eingebetteten Sensorkomponente in Form von Windungen einer Spule aufweist, wobei die Elektronik für einen Temperaturbereich oberhalb 125°C ausgelegt und mit dem Sensorelement (1) direkt verbunden ist und wobei die Elektronik auf einer Rückseite des Substrats (2) angeordnet ist und aus Logik-Bausteinen besteht oder Logik-Bausteine aufweist, mit denen Oszillator- und Demodulatorschaltungen (17, 18) realisiert sind.

2. Wegsensor nach Anspruch 1, **dadurch gekennzeichnet, dass** die Elektronik oder mindestens eine Komponente (4) der Elektronik auf Basis der Sol, Silicon on Insulator, Technologie oder auf Basis von GaAs, SiC oder Diamant als Halbleitermaterial hergestellt ist.

3. Wegsensor nach Anspruch 1 oder 2, **dadurch gekennzeichnet, dass** mindestens eine Leiterbahn auf dem Substrat (2) angeordnet ist.

4. Wegsensor nach Anspruch 3, **dadurch gekennzeichnet, dass** das Substrat (2) eine Leiterplatte, vorzugsweise aus Polyimid, PTFE oder LCP, aufweist.

5. Wegsensor nach Anspruch 3, **dadurch gekennzeichnet, dass** das Substrat (2) eine Keramik, vorzugsweise aus Al₂O₃, LTCC oder HTCC, aufweist.

6. Wegsensor nach einem der Ansprüche 1 bis 5, **dadurch gekennzeichnet, dass** die Elektronik in einem Keramikgehäuse angeordnet ist oder mindestens eine in einem Keramikgehäuse angeordnete Komponente (4) aufweist.

7. Wegsensor nach einem der Ansprüche 1 bis 6, **dadurch gekennzeichnet, dass** die Elektronik per Chip-on-board als Chip-on-Ceramic mit dem Sensorelement (1) verbunden ist.

8. Wegsensor nach einem der Ansprüche 1 bis 7, **dadurch gekennzeichnet, dass** die Ansteuerungselektronik 2. als Oszillator 2. (17) einen Sinus- oder Rechteck-Oszillator aufweist.

9. Wegsensor nach einem der Ansprüche 1 bis 8, **dadurch gekennzeichnet, dass** die Auswerteelektronik als funktionale Baugruppe einen Demodulator (18) zur Erzeugung eines gleichgerichteten Spannungs- oder Stromsignals, vorzugsweise zusätzlich einen Vorverstärker (19) und/oder einen Analog-Digital-Wandler (20) und/oder einen Microcontroller, aufweist.

10. Wegsensor nach einem der Ansprüche 1 bis 9, **dadurch gekennzeichnet, dass** der Anschluss der Elektronik für deren Ausgang und/oder Versorgung über ein Adernpaar oder zwei Adernpaare realisiert ist.

11. Wegsensor nach einem der Ansprüche 1 bis 10, **dadurch gekennzeichnet, dass** die Elektronik einen Kabelanschluss aufweist.

12. Wegsensor nach einem der Ansprüche 1 bis 11, **dadurch gekennzeichnet, dass** der Sensor oder das Sensorelement (1) und/oder die Elektronik hermetisiert ist oder sind.

13. Wegsensor nach Anspruch 12, **dadurch gekennzeichnet, dass** die Hermetisierung durch ein Gehäuse, vorzugsweise durch ein mit dem Substrat (2) verlötetes Gehäuse, oder durch eine Kapselung im Substrat (2), vorzugsweise durch eine Anordnung der Elektronik oder einer Komponente (4) der Elektronik in oder auf einer Lage oder Schicht des Substrats (2) und weiter vorzugsweise durch mindestens eine weitere darüber angeordnete Lage (15) oder Schicht des Substrats (2), realisiert ist.

## Claims

1. Position sensor which operates contactlessly by means of eddy current or inductively and which has a sensor element (1) which is suitable for high temperatures above 125°C and an electronic system which has an electronic control and/or evaluation unit, wherein the sensor element (1) has a substrate (2) having at least one sensor component which is embedded therein in the form of windings of a coil, wherein the electronic system is configured for a temperature range above 125°C and is directly connected to the sensor element (1), and wherein the electronic system is arranged at a rear side of the substrate (2) and comprises logic modules or has logic modules by means of which oscillator and demodulator circuits (17, 18) are produced.

2. Position sensor according to claim 1, **characterised in that** the electronic system or at least one component (4) of the electronic system is produced on the basis of SOI, silicon on insulator, technology or on the basis of GaAs, SiC or diamond as a semi-conductor material.

3. Position sensor according to claim 1 or 2, **characterised in that** at least one strip conductor is arranged on the substrate (2).

4. Position sensor according to claim 3, **characterised in that** the substrate (2) has a printed circuit board, preferably made of polyimide, PTFE or LCP.

5. Position sensor according to claim 3, **characterised in that** the substrate (2) has a ceramic material, preferably comprising Al₂O₃, LTCC or HTCC.

6. Position sensor according to any one of claims 1 to 5, **characterised in** the electronic system is arranged in a ceramic housing or has at least one component (4) which is arranged in a ceramic housing.

7. Position sensor according to any one of claims 1 to 6, **characterised in that** the electronic system is connected to the sensor element (1) by means of chip-on-board as a chip-on-ceramic.

8. Position sensor according to any one of claims 1 to 7, **characterised in that** the electronic control system has as an oscillator (17) a sine wave or rectangular oscillator.

9. Position sensor according to any one of claims 1 to 8, **characterised in that** the electronic evaluation unit has as a functional sub-assembly a demodulator (18) for producing a rectified voltage or current signal, preferably in addition a preamplifier (19) and/or an analogue/digital converter (20) and/or a microcontroller.

10. Position sensor according to any one of claims 1 to 9, **characterised in that** the connection of the electronic system for the output and/or supply thereof is produced by means of a pair or strands or two pairs of strands.

11. Position sensor according to any one of claims 1 to 10, **characterised in that** the electronic system has a cable connection.

12. Position sensor according to any one of claims 1 to 11, **characterised in that** the sensor or the sensor element (1) and/or the electronic system is/are hermetically sealed.

13. Position sensor according to claim 12, **characterised in that** the hermetic sealing is produced by means of a housing, preferably by means of a housing which is soldered to the substrate (2), or by means of an encapsulation in the substrate (2), preferably by means of an arrangement of the electronic system or a component (4) of the electronic system in or on a ply or layer of the substrate (2) and more preferably by means of at least one additional ply (15) or layer, which is arranged thereabove, of the substrate (2).

## Revendications

1. Capteur de déplacement fonctionnant sans contact par courants de Foucault ou de manière inductive, avec un élément de capteur (1) adapté à des hautes températures supérieures à 125 °C et une électronique comprenant une électronique de commande et/ou une électronique d'analyse, dans lequel l'élément de capteur (1) comprend un substrat (2) avec au moins un composant de capteur intégré à l'intérieur, sous la forme d'enroulements d'une bobine, dans lequel l'électronique est conçue pour une plage de températures supérieures à 125 °C et est reliée directement avec l'élément de capteur (1) et dans lequel l'électronique est disposée sur une face arrière du substrat (2) et est constituée de composants logiques ou comprend des composants logiques avec lesquels des circuits oscillateurs et démodulateurs (17, 18) sont réalisés.

2. Capteur de déplacement selon la revendication 1, **caractérisé en ce que** l'électronique ou au moins un composant (4) de l'électronique est réalisé à base de technologie Sol, Silicon on Insulator, ou à base de GaAs, SiC ou de diamant en tant que matériau semiconducteur.

3. Capteur de déplacement selon la revendication 1 ou 2, **caractérisé en ce qu'**au moins une piste conductrice est disposée sur le substrat (2).

4. Capteur de déplacement selon la revendication 3, **caractérisé en ce que** le substrat (2) comprend un circuit imprimé, de préférence constitué de polyimide, de PTFE ou de LCP.

5. Capteur de déplacement selon la revendication 3, **caractérisé en ce que** le substrat (2) comprend une céramique, de préférence constituée de Al₂O₃, LTCC ou HTCC.

6. Capteur de déplacement selon l'une des revendications 1 à 5, **caractérisé en ce que** l'électronique est disposée dans un boîtier en céramique ou comprend au moins un composant (4) disposé dans un boîtier en céramique.

7. Capteur de déplacement selon l'une des revendications 1 à 6, **caractérisé en ce que** l'électronique est reliée par Chip-on-board en tant que Chip-on-Ceramic avec l'élément de capteur (1).

8. Capteur de déplacement selon l'une des revendications 1 à 7, **caractérisé en ce que** l'électronique de commande comprend, en tant qu'oscillateur (17), un oscillateur sinusoïdal ou rectangulaire.

9. Capteur de déplacement selon l'une des revendications 1 à 8, **caractérisé en ce que** l'électronique d'analyse comprend, en tant que sous-ensemble fonctionnel, un démodulateur (18) pour la production d'un signal de tension ou de courant redressé, de préférence comprend en outre un pré-amplificateur (19) et/ou un convertisseur analogique-numérique (20) et/ou un microcontrôleur.

10. Capteur de déplacement selon l'une des revendications 1 à 9, **caractérisé en ce que** le raccordement de l'électronique est réalisé, pour sa sortie et/ou son alimentation, à l'aide d'une paire de fils ou de deux paires de fils.

11. Capteur de déplacement selon l'une des revendications 1 à 10, **caractérisé en ce que** l'électronique comprend un raccordement de câble.

12. Capteur de déplacement selon l'une des revendications 1 à 11, **caractérisé en ce que** le capteur ou l'élément de capteur (1) et/ou l'électronique est imperméabilisée.

13. Capteur de déplacement selon la revendication 12, **caractérisé en ce que** l'imperméabilisation est réalisée à l'aide d'un boîtier, de préférence un boîtier soudé par brasage avec le substrat (2) ou à l'aide d'une encapsulation dans le substrat (2), de préférence grâce à la disposition de l'électronique ou d'un composant (4) de l'électronique dans ou sur une couche du substrat (2) et en outre de préférence à l'aide d'au moins une autre couche (15), disposée au-dessus, du substrat (2).
